# EUROPÄISCHE PATENTSCHRIFT

(11) **EP 1 995 429 B1**
(45) Veröffentlichungstag und Bekanntmachung des Hinweises auf die Patenterteilung: **09.02.2011**
(21) Anmeldenummer: 07090100.4
(22) Anmeldetag: 24.05.2007
(51) Int. Cl.: F02B 39/10, F01D 25/16, H02K 5/128, H02K 7/14, H02K 7/18

(54) **Turbolader**
Turbocharger
Turbosoufflante

(43) Veröffentlichungstag der Anmeldung: 26.11.2008
(62) Teilanmeldung aus: 07075981.6
(73) Patentinhaber: Lindenmaier GmbH, 88487 Baltringen (DE); SycoTec GmbH & Co. KG, 88299 Leutkirch im Allgäu (DE)
(72) Erfinder: Gödeke, Holger, 88480 Achstetten (DE); Löffler, Rudolf, 88454 Unteressendorf (DE); Heber, Ralf, 89155 Erbach-Ersingen (DE); Bischof, Thomas, 87758 Illerbeuren (DE); Maier, Sandra, 88410 Bad Wurzach (DE); Kämpfer, Oliver, 87700 Memmingen (DE)
(74) Vertreter: Pfenning, Meinig & Partner GbR

(56) Entgegenhaltungen:
- EP-A1- 1 201 891
- EP-A2- 1 182 346
- WO-A-01/88351
- DE-A1- 3 339 918
- DE-A1-102005 010 921

## Beschreibung

Die Erfindung bezieht sich auf einen Turbolader nach Patentanspruch 1 sowie auf ein Antriebssystem nach Patentanspruch 19, das einen solchen Turbolader enthält.

Verbrennungskraftmaschinen mit Turboladern sind im Kraftfahrzeugsektor prinzipiell bekannt. Typischerweise wird ein Abgasstrom aus dem Verbrennungsmotor heraus genutzt, um ein Turbinenrad anzutreiben. Dieses Turbinenrad ist beispielsweise über eine Welle mit einem Verdichterrad gekoppelt, das eine Verdichtung von zugeführter Frischluft in dem Brennraum sicherstellt. Eine solche Vorverdichtung bzw. "Aufladung" führt zu einer erhöhten Motorleistung bzw. erhöhtem Drehmoment gegenüber herkömmlichen Verbrennungskraftmaschinen. Allerdings besteht bei derartig aufgeladenen Verbrennungskraftmaschinen das Problem des so genannten "Turbolochs", das insbesondere beim Anfahren und Beschleunigen aus niedrigen Drehzahlen des Fahrzeugs, also wenn die Verbrennungskraftmaschine rasch in Bereiche höherer Leistung beschleunigt werden soll, auftritt. Dies rührt daher, dass der erhöhte Luftmengenbedarf auf der Luftzuführseite nur mit einer Verzögerung bereitgestellt werden kann (unter anderem bedingt durch die Trägheit des Systems Turbinenrad-Verdichterrad).

Die EP 1 182 346 A2 zeigt einen Abgasturbolader für eine Brennkraftmaschine. Dieser weist eine im Abgasstrang angeordnete Abgasturbine und einen im Ansaugtrakt angeordneten Verdichter auf, der über eine Welle mit der Turbine verbunden. An den Außenkanten des Verdichterrades sind magnetische Abschnitte angeordnet, die von einem Stator, der im Verdichtergehäuse angebracht ist, elektromotorisch angetrieben werden. Zwischen den magnetischen Abschnitten des Verdichterrades und dem Stator ist ein sehr schmaler Spalt eingebracht, der allenfalls die Durchleitung einer Rezirkulationsströmung erlaubt.

Die WO 01/88351 A1 zeigt in schematischer Darstellung einen Turbolader mit einem Verdichterrad sowie einem Turbinenrad. Verdichterrad und Turbinenrad sind über eine Welle miteinander verbunden. Auf dieser Welle ist außerdem ein Rotor eines Elektromotors angebracht, der über einen Stator antreibbar ist und auf diese Weise eine Beschleunigung des Verdichterrades über die Welle ermöglicht.

Es ist die Aufgabe der vorliegenden Erfindung, einen Turbolader zur Verfügung zu stellen, der mit geringstmöglicher Verzögerung die genau richtige Menge Frischluft zuführt, und der darüber hinaus im Aufbau einfach und möglichst wenig störanfällig ist.

Diese Aufgabe wird durch die technischen Merkmale des Anspruchs 1 gelöst.

Der erfindungsgemäße Turbolader enthält ein Turbinenrad sowie ein damit verbundenes Verdichterrad, wobei auf der dem Turbinenrad abgewandten Seite des Verdichterrades ein Elektromotor vorgesehen ist und ein mit dem Verdichterrad drehfest verbundener Rotor des Elektromotors frei auskragend ausgeführt ist. Der kleinste Innendurchmesser des Stators 1,5- bis 8mal ist so groß wie der größte Außendurchmesser des Rotors. Die angegebenen Längen beziehen sich hierbei jeweils auf die größten Ausdehnungen bzw. kleinsten Ausdehnungen der beteiligten Elemente, allerdings lediglich im Bereich der elektrisch bzw. magnetisch wirksamen Elemente (also nur über die Länge des beispielsweise Rotormagneten, eine nachfolgende Verdickung (beispielsweise im Bereich des Verdichterrades) ist hier nicht maßgeblich.

Der Elektromotor dient dazu, bei einer (z.B. von einer Steuerelektronik festgestellten) höheren Frischluftanforderung eine zusätzliche Beschleunigung des Verdichterrades durch den Elektromotor bereitzustellen. Hierzu sind Elektromotoren günstig, da diese ohne merkliche Anfahrverzögerung mit hohem Drehmoment beschleunigt werden können.

Außerdem ist vorteilhaft, dass der Elektromotor im vorliegenden Fall nicht zwischen dem Turbinenrad und dem Verdichterrad angeordnet ist. Eine solche Anordnung würde zu thermischen Problemen führen und stellt auch eine starke konstruktive Abwandlung von herkömmlichen (rein mechanischen) Turboladern dar. Neben dem erhöhten konstruktiven Aufwand ist der Reparaturaufwand bei solchen Aufbauten erheblich.

Vorteilhaft ist daher, dass im vorliegenden Fall in axialer Richtung gesehen eine Abfolge "Turbinenrad, Welle (Lagerung), Verdichterrad, Elektromotor" gegeben ist. Der Elektromotor ist somit im Wesentlichen nur der Umgebungstemperatur ausgesetzt, so dass es hier nicht zu einer thermischen Zersetzung der Statorwicklung etc. kommen kann.

Der besondere Vorteil liegt in dem frei auskragenden Ende jenseits des Verdichterrades. Hier ist der Rotor des Elektromotors angebracht. Es ist erfindungsgemäß nicht notwendig, hier eine weitere Lagerstelle anzubringen, um den Rotor somit beidseitig zu lagern. Eine solche Lagerstelle würde zum einen die elektrischen Eigenschaften des Elektromotors unter Umständen stören und u.U. eine statische Überbestimmung darstellen. Des Weiteren wird die Reibungsarbeit im System unnötig erhöht durch ein solches Lager. Außerdem ist auch die Frischluftzuführung durch ein solches Lager behindert, da entsprechende Streben die Einlassluftöffnung zum Verdichterrad hin verkleinern.

Außerdem ist mit dem "auskragenden" Rotor der konstruktive Unterschied zu rein mechanischen Turboladern denkbar gering, so dass auf diese Weise sehr kostengünstig, modular und leicht reparierbar ein Elektromotor an herkömmliche Turbolader ergänzt werden kann.

Das erfindungsgemäße Antriebssystem enthält neben dem erfindungsgemäßen Turbolader einen Verbrennungskraftmotor. Unter "Verbrennungskraftmotor" soll im Kontext der vorliegenden Erfindung jeglicher Motor verstanden werden, der sowohl Frischluft/Frischgas als auch Abgas benötigt bzw. produziert, so dass ein entsprechender Turbolader hier Anwendung finden könnte. Darüber hinaus enthält das Antriebssystem auch einen Speicher für elektrische Energie. Hier ist vorzugsweise der Elektromotor des Turboladers mit dem Speicher für elektrische Energie verbunden zur Entnahme elektrischer Energie in einem Motorbetrieb des Turboladers und zur Einspeisung elektrischer Energie in einem Generatorbetrieb des Turboladers.

Auf diese Weise kann zum einen überschüssige "mechanische Energie" in elektrische Energie wieder gewonnen werden, hierdurch wird die Energiebilanz des Antriebssystems nochmals verbessert. Insgesamt ergibt sich somit eine sehr gute Regelung des Turboladers, da neben einer Beschleunigung im Verdichterrad bzw. Turbinenrad auch ein entsprechender "Bremsvorgang" möglich ist.

Besonders vorteilhaft bei diesem Antriebssystem ist auch, wenn der Elektromotor des Turboladers bzw. der mit ihm verbundene elektrische Speicher zusätzlich mit einem elektromotorischen Antrieb eines Kraftfahrzeuges verbindbar ist. Dieser elektromotorische Antrieb kann beispielsweise ein Nabenelektromotor (oder ein anderer im Antriebsstrang vorgesehener Elektromotor) sein, der an einem Antriebsrad des Kraftfahrzeugs befestigt ist. In modernen, so genannten "Hybridfahrzeugen" wird auf diese Weise sowohl eine zusätzliche Bereitstellung von Drehmoment bzw. Motorleistung beim Beschleunigen erzielt, da neben dem Verbrennungskraftmotor auch die elektrischen Nabenmotoren für die Beschleunigung zuständig sind. Bei Bremsvorgängen kann durch das Umschalten der elektrischen Nabenmotoren in den Generatorbetrieb eine Bremswirkung und somit eine Rückgewinnung von kinetischer in elektrische Energie erreicht werden, die in einem entsprechenden Speicher zwischengespeichert wird. Ist nun auch der Elektromotor des Turboladers mit eben diesem Speicher verbunden, kann somit zentral die gesamte elektrische Energie "verwaltet" werden, um diese jederzeit nutzbringend abrufbar zu machen.

Daneben ist es selbstverständlich aber auch möglich, dass das Turboladersystem und die elektrischen Nabenmotoren (bzw. andere Motore im Antriebsstrang) voneinander unabhängige elektrische Speicher haben.

Zur Steuerung der elektrischen Energie bzw. zur Bereitstellung optimalen Drehmoments bei niedrigem Verbrauch ist in dem Antriebssystem vorzugsweise eine Steuerelektronik vorzusehen zur Ermittlung der Drehzahl von Turbinenrad oder Verdichterrad; Ist-Werten von turbinengehäuseseitigen und verdichtergehäuseseitigen Druckverhältnissen sowie weiteren für den Verbrennungskraftmotor drehmomentrelevanten Werten vorzusehen.

Eine vorteilhafte Weiterbildung sieht vor, dass Turbinenrad und Verdichterrad dauerhaft drehfest miteinander verbunden sind. Dies bedeutet, dass keine Kupplung zwischen Turbinenrad und Verdichterrad gegeben ist, wodurch der mechanische Aufbau und die Störanfälligkeit des Systems erhöht würden. Stattdessen wird angestrebt, durch einen leichten Rotor, ein leichtes Verdichterrad, eine leichte Welle und ein entsprechend massearmes Turbinenrad die bewegten Drehmassen zu begrenzen.

Das Gehäuse des Turboladers ist vorzugsweise modular aufgebaut, d.h., dass neben einem Turbinengehäuse für das Turbinenrad ein Verdichtergehäuse für das Verdichterrad gegeben ist. Das Turbinengehäuse ist vorzugsweise mit einem Abgasfächer verbunden, der von den einzelnen Zylindern des Verbrennungskraftmotors Abgas zum Turbinenrad hin führt. Aufgrund der thermischen Belastung des Turbinengehäuses sind die konstruktiven Anforderungen etwas anders als an das Verdichtergehäuse, das das Verdichterrad umgibt. Die eigentliche Lagerung von Turbinenrad und Verdichterrad findet vorzugsweise ausschließlich zwischen Turbinenrad und Verdichterrad statt. D.h., dass auf der dem Turbinenrad abgewandten Seite des Verdichterrades keine zusätzliche Lagerung gegeben ist, da hier ja der Stator des Elektromotors frei auskragt. Vorzugsweise ist ein Lagergehäuse zwischen Turbinengehäuse und Verdichtergehäuse vorgesehen, das zur Aufnahme von Lagerelementen für das Turbinenrad und das Verdichterrad dient.

Vorzugsweise enthält der Elektromotor einen Stator, der im Wesentlichen eine hohlzylindrische Form aufweist und der den Rotor konzentrisch umgibt. Hierbei ist vorteilhaft, dass der Stator als Teil der Innenwand des Verdichtergehäuses ausgeführt werden kann. Der Stator kann beispielsweise auch als Einsatz in eine korrespondierende Öffnung des Verdichtergehäuses einsetzbar sein. Vorteilhaft an diesen Ausführungsformen ist, dass nur eine geringstmögliche konstruktive Änderung herkömmlicher mechanischer Turbolader nötig ist, so dass hierdurch insbesondere in der Großserie große Kosten- und Wettbewerbsvorteile realisierbar sind.

Der Rotor des Elektromotors weist vorzugsweise einen Rotormagneten auf, der von einer Armierung umgeben ist. Hierdurch wird der Rotormagnet mechanisch geschützt. Es kann außerdem auf diese Weise auf die Art des Magnetfeldes Einfluss genommen werden. Der Rotormagnet kann so ausgebildet sein, dass er partiell oder auch komplett in das Verdichterrad integriert ist. Besteht das Verdichterrad aus faserverstärktem oder unverstärktem Kunststoff, so kann der Rotormagnet bei der Produktion direkt mit der Kunststoffmasse umspritzt werden, wodurch eine kostengünstige Großserienfertigung ermöglicht wird.

Vorzugsweise ist die Armierung des Rotors "zylinderförmig" ausgeführt.

Fertigungstechnisch ist es vorteilhaft, dass der Rotormagnet innen bereichsweise hohl ist zum Aufstecken auf eine gemeinsame Welle mit dem Verdichterrad. Auf diese Weise ist eine kostengünstige Fertigung möglich.

Vorzugsweise kann das Verdichterrad auch aus einem nichtmetallischen Material, vorzugsweise einem verstärkten oder unverstärkten Kunststoff sein. Hierdurch wird das elektromagnetische Feld des Elektromotors praktisch nicht mehr beeinflusst.

Eine weitere vorteilhafte Weiterbildung sieht vor, dass der Rotorspalt zwischen Rotor und Stator eine Einlassluftöffnung für das Verdichterrad darstellt. Dies bedeutet wiederum, dass der Elektromotor den Luftzustrom kaum behindert und dass keine zusätzlichen Luftzuführöffnungen vorgesehen werden müssen, welche den Strömungswiderstand unnötig erhöhen würden. Es ist daher sogar möglich, dass die Einlassluftöffnung frei von Streben zwischen Rotor und Stator ist. Aufgrund des Wegfalls des "Gegenlagers" ist hier eine solche Verstrebung nicht notwendig.

Zur Steigerung der energetischen Effizienz kann hierbei auch die Sollspannung des Elektromotors mehr als 12 V, beispielsweise 24 oder 48 V betragen.

Besonders vorteilhaft ist, dass der Elektromotor vom Motorbetrieb in den Generatorbetrieb umschaltbar ist. Erreicht der Ladedruck (im Turbinengehäuse) einen bestimmten Sollwert, wird unter Verwendung eines rückspeisefähigen Umrichters zusätzliche Energie erzeugt Darüber hinaus kann idealerweise durch die energetische Umwandlung der Bremsenergie auf ein Wastegate/Druckdose zum Abblasen eines überschüssigen Abgasdrucks verzichtet werden.

Die Steuerung des Motor/Generatorbetriebs ermöglicht die gezielte Regelung des Aufladevorgangs. Die für die Regelung wichtige Kenngröße Rotordrehzahl kann mit Hilfe eines Hallsensors der in den Motor integriert ist oder über die Motorsteuerung erfasst werden. Somit lässt sich der Verbrennungsprozeß des Kolbenmotors optimieren. Vorzugsweise erfolgt die Steuerung über das zentrale Motormanagement.

Weitere vorteilhafte Weiterbildungen werden in den übrigen abhängigen Ansprüchen angegeben.

Die vorliegende Erfindung wird nun anhand mehrerer Figuren erläutert. Es zeigen:
- Fig. 1a: eine erste Ausführungsform eines erfin- dungsgemäßen Turboladers im Teilschnitt;
- Fig. 1b: eine Ansicht des Turboladers aus Fig. 1a gemäß A;
- Fig. 1c: eine Ansicht des Turboladers aus Fig. 1a gemäß B;
- Fig. 1d: eine Teilexplosionszeichnung des Turbola- ders aus Fig. 1a;
- Fig. 2a: eine zweite Ausführungsform eines erfin- dungsgemäßen Turboladers im Teilschnitt; und
- Fig. 2b: einen Schnitt des Turboladers gemäß Fig.2a in Schnittebene D.

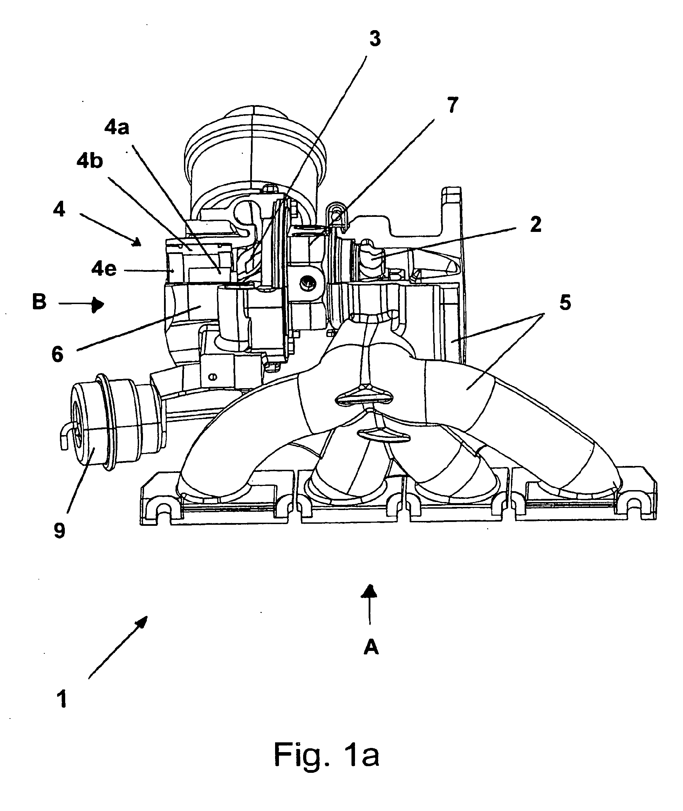

Im Folgenden sollen die Grundzüge der Erfindung anhand der ersten Ausführungsform gemäß Fign. 1a bis 1d gezeigt werden.

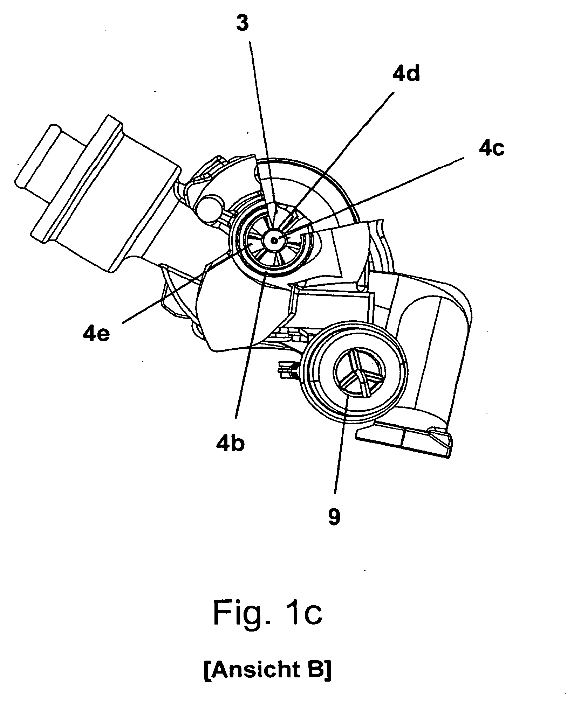

Fign. 1a bis 1d zeigen einen elektrisch modifizierten mechanischen Turbolader 1, der mit einem Turbinengehäuse 5 an einen Verbrennungskraftmotor ankoppelbar ist. Durch den in Fig. 1a gezeigten Abgasfächer wird nach der Verbrennung das Abgas gesammelt und zum Antrieb eines Turbinenrades 2 genutzt. Das Turbinenrad 2 ist vom Turbinengehäuse 5 umgeben und ist im Wesentlichen einem herkömmlichen mechanischen Turbolader entnommen. An das Turbinengehäuse 5 schließt sich ein Lagergehäuse 7 und sodann ein Verdichtergehäuse 6 an. In diesem Verdichtergehäuse 6 ist ein Verdichterrad angebracht, das durch eine Einlassöffnung zugeführt Luft (diese Einlassluftöffnung ist insbesondere in Fig. 1c gut zu sehen) mittels eines Verdichterrades 3 verdichtet und auf hier nicht dargstellte Weise zu dem Brennraum des Verbrennungskraftmotors führt. Das Verdichterrad 3 zeigt in Fig. 1a linksseitig einen Fortsatz, an dem ein Rotor 4a eines Elektromotors gegeben ist. Der Rotor 4a ist zentral in der Einlassluftöffnung 4e angebracht.

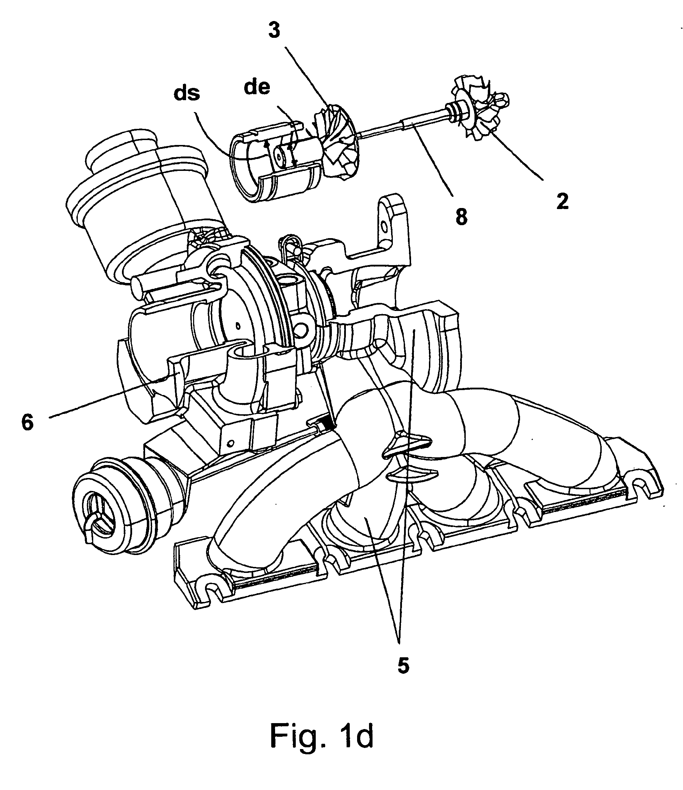

Um den Rotor 4a herum ist ein Stator 4b vorgesehen, der im Wesentlichen eine hohlzylindrische Form aufweist und als Teil der Innenwand des Verdichtergehäuses im Bereich der Einlassluftöffnung dargestellt ist. Vorliegend ist der Stator 4b sogar als Einsatz in eine entsprechende Öffnung vorgesehen, so dass dieser sehr leicht montierbar ist. Vorliegend ist in Fig. 1a also der Rotorspalt zwischen Rotor 4a und Stator 4b die Einlassluftöffnung 4e für das Verdichterrad. Hierbei ist auch gemäß Fig. 1a die Einlassluftöffnung 4e frei von Streben zwischen Rotor und Stator. Der kleinste Innendurchmesser des Stators (siehe "d_{S}" in Fig. 1d) 1,5 mal. größer als der größte Außendurchmesser d_{R} des Rotors.

Der Rotor 4a des Elektromotors 4 weist einen Rotormagneten 4c auf, der von einer Armierung umgeben ist (siehe z.B. Fig. 1d). Hierbei ist die Armierung im Wesentlichen "becherförmig" ausgeführt, wobei der Boden des Bechers zum Verdichterrad hin fast vollständig geschlossen ist (abgesehen von einer zentrischen Montagebohrung).

Das Verdichterrad kann (muss aber nicht) aus einem nichtmetallischen Material sein, hier bei einer Ausführung beispielsweise aus einem unverstärkten Kunststoff ist die Beeinflussung des elektromagnetischen Feldes des Elektromotors minimiert. Der Rotormagnet 4c wiederum ist bereichsweise hohl zum Aufstecken auf eine gemeinsame Welle mit dem Verdichterrad. Hier ist in Fig. 1d eine Bohrung 4c des Rotormagneten entsprechend zu sehen. Außerdem ist zu sehen, dass in der Abfolge Rotor (bestehend aus Rotormagnet 4c und Armierung 4d), Verdichterrad 3, Welle 8, Turbinenrad 2 eine Abfolge von Elementen gezeigt ist, die eine thermische Belastung des Elektromotors minimieren. Die Welle 8 ist hierbei in der vorliegenden Ausführungsform so ausgeführt, dass Turbinenrad 2, Verdichterrad 3 sowie Rotor 4a fest (drehfest) miteinander verbunden sind, also durch keine Drehkupplung bzw. Freilauf trennbar sind.

Allerdings ist es prinzipiell möglich, eine solche Kupplung im Rahmen der vorliegenden Erfindung vorzusehen, falls beispielsweise des Turbinenrades 2 sehr hoch ist, hierdurch würde allerdings der konstruktive Aufwand auch wiederum erhöht.

Die Sollspannung des Elektromotors 4 in Fig. 1a beträgt vorliegend 12 V, es sind allerdings auch andere Spannungen (beispielsweise 48 V für Hybridfahrzeuge) möglich.

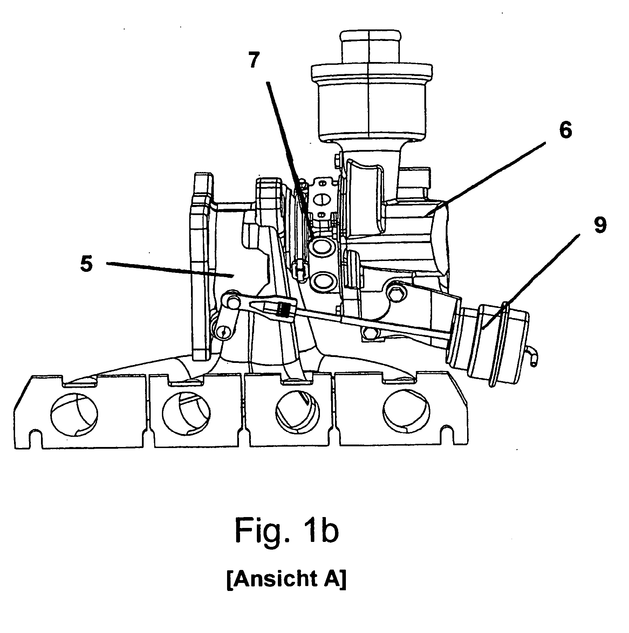

Der Elektromotor ist sowohl im Motorbetrieb (zur Beschleunigung und Vermeidung eines "Turbolochs" als auch im Generatorbetrieb (zur Rückgewinnung von Energie) betreibbar. Erreicht der Ladedruck (im Turbinengehäuse) einen bestimmten Sollwert, wird unter Verwendung eines rückspeisefähigen Umrichters zusätzliche elektrische Energie erzeugt. Idealerweise kann durch dieser energetische Umwandlung der Bremsenergie im Generatorbetrieb auf ein Wastegate/Druckdose zum Abblasen eines überschüssigen Abgasdrucks wie sie in Fig.1b Ziffer 9 dargestellt ist, verzichtet werden.

Der erfindungsgemäße Turbolader findet Anwendung in einem erfindungsgemäßen Antriebssystem für Kraftfahrzeuge, das einen mit dem Turbolader verbundenen Verbrennungskraftmotor sowie einen Speicher für elektrische Energie enthält. Der Elektromotor des Turboladers 1 ist hierbei mit dem Speicher für elektrische Energie verbunden zur Entnahme elektrischer Energie in einem Motorbetrieb des Turboladers 1 und zur Einspeisung elektrischer Energie in einen Generatorbetrieb des Turboladers. In einer besonders bevorzugten Ausführungsform ist der Elektromotor des Turboladers mit einem elektrischen Speicher verbunden, wobei dieser elektrische Speicher zusätzlich mit einem elektromotorischen Antrieb eines Kraftfahrzeugs verbindbar ist. Dies kann ein "Nabenmotor" eines Kraftfahrzeugs sein oder ein anderer Elektromotor, der im Antriebsstrang eines Kraftfahrzeugs (beispielsweise im Bereich des Getriebes) vorgesehen ist. Dieser Anschluss des elektrischen Turboladers an ein "Hybrid"-Fahrzeug ist besonders energieeffizient.

Zur effizienten Steuerung des Antriebssystems bzw. des Turboladers ist eine Steuerelektronik zur Ermittlung der Drehzahl von Turbinenrad 2 oder Verdichterrad 3, Ist-Werten von turbinengehäuseseitigen und verdichtergehäuseseitigen Druckverhältnissen sowie weiteren für den Verbrennungskraftmotor drehmomentrelevanten Werten vorgesehen.

Die wichtigsten Komponenten der ersten Ausführungsform gemäß Fign. 1a bis 1d sind in Fig. 1d, dort oben rechts als Teilexplosionszeichnung gezeigt. Hier ist zu sehen, dass es sich um einen Turbolader 1 handelt, der ein Turbinenrad 2 sowie ein damit verbundenes Verdichterrad 3 aufweist, wobei auf der dem Turbinenrad abgewandten Seite des Verdichterrades ein Elektromotor 4 vorgesehen ist (bestehend aus Rotor 4a und Stator 4b) und einen mit dem Verdichterrad 3 drehfest verbundener Rotor 4a des Elektromotors 4 frei auskragend ausgeführt ist.

Dieses "freie Auskragen" ist vorteilhaft, da damit der konstruktive Aufwand vermindert wird und beispielsweise eine statische Überbestimmung der Gesamtlagerung vermieden wird. Unter "frei auskragend" sollen solche Anordnungen verstanden werden, bei denen der Rotor nicht gesondert und dauernd gelagert wird. Eventuell vorgesehene "Auffangkäfige" etc., die eine zu starke Biegung des frei kragenden Rotors, beispielsweise aufgrund von Biegeresonanzen verhindern sollen, gelten in diesem Sinne nicht als "Lager"

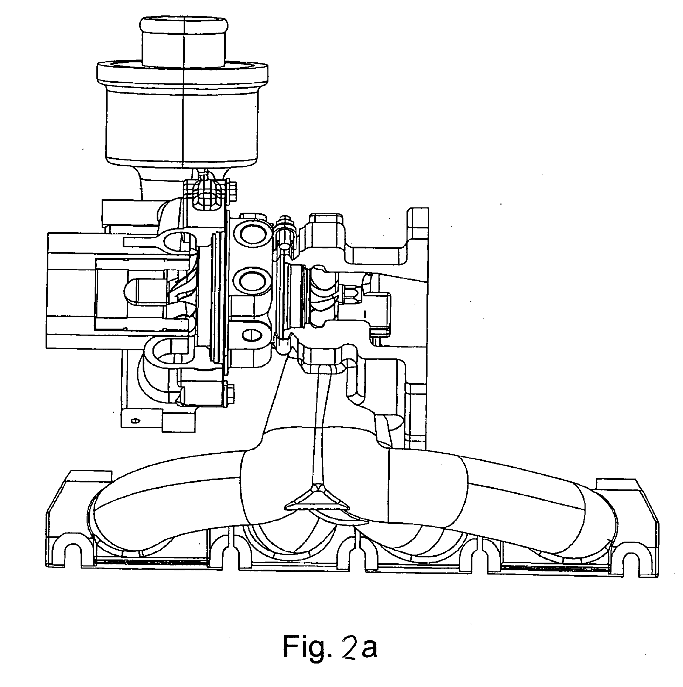

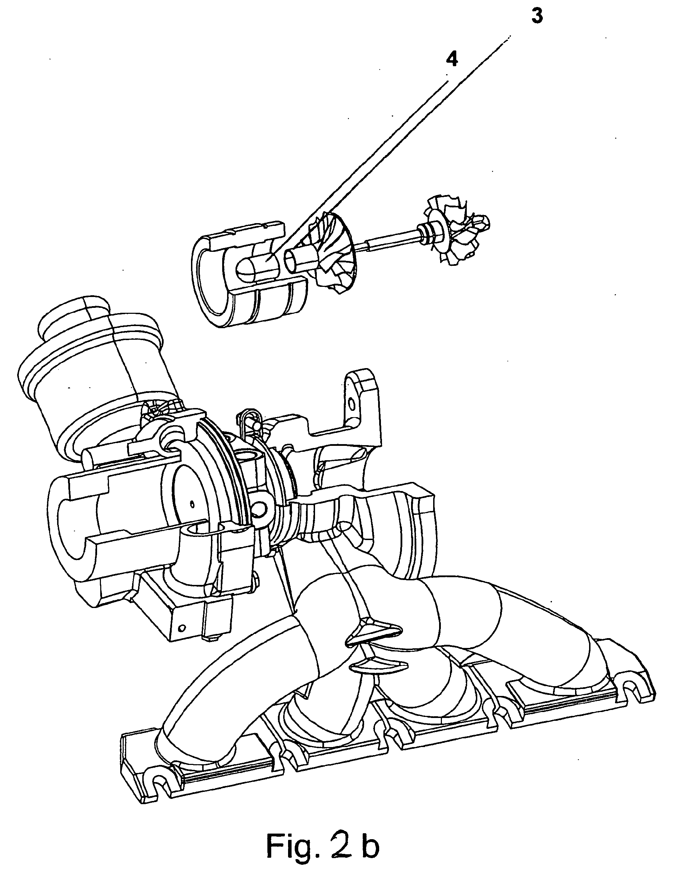

Eine zweite Ausführungsform ist in den Fign. 2a und 2b gezeigt. Hierbei ist der Rotormagnet 4 bei der Herstellung partiell in das Verdichterrad 3 integriert worden. Der Stator bildet die Innenkontur des Verdichtergehäuses. Er verfügt über eine Hall-Sonde mit deren Hilfe die Rotordrehzahl kontinuierlich ermittelt werden kann

Der Elektromotor ist sowohl im Motorbetrieb (zur Beschleunigung und Vermeidung eines "Turbolochs" als auch im Generatorbetrieb (zur Rückgewinnung von Energie) betreibbar. Erreicht der Ladedruck (im Turbinengehäuse) einen bestimmten Sollwert, wird unter Verwendung eines rückspeisefähigen Umrichters zusätzliche Energie erzeugt. Durch die energetische Umwandlung der Bremsenergie im Generatorbetrieb kann in dieser Konstruktionsvariante auf ein Wastegate und eine Druckdose zum Abblasen eines überschüssigen Abgasdrucks wie sie in Fig.1b Ziffer 9 dargestellt ist, verzichtet werden.

## Patentansprüche

1. Turbolader (1), enthaltend ein Turbinenrad (2) sowie ein damit verbundenes Verdichterrad (3), wobei auf der dem Turbinenrad abgewandten Seite des Verdichterrades ein Elektromotor (4) vorgesehen ist und ein mit dem Verdichterrad (3) drehfest verbundener Rotor (4a) des Elektromotors frei auskragend ausgeführt ist und der Elektromotor einen Stator aufweist, **dadurch gekennzeichnet , dass** der kleinste Innendurchmesser des Stators 1,5- bis 8-mal so groß ist wie der größte Außendurchmesser des Rotors.

2. Turbolader nach Anspruch 1, **dadurch gekennzeichnet, dass** Turbinenrad (2) und Verdichterrad (3) dauerhaft drehfest miteinander verbunden sind.

3. Turbolader nach einem der vorhergehenden Ansprüche, **dadurch gekennzeichnet, dass** dieser ein Gehäuse aufweist, das ein Turbinengehäuse (5) für das Turbinenrad (2) sowie ein Verdichtergehäuse (6) für das Verdichterrad (3) enthält.

4. Turbolader nach einem der vorhergehenden Ansprüche, **dadurch gekennzeichnet, dass** die Lagerung von Turbinenrad (2) und Verdichterrad (3) ausschließlich im Bereich zwischen Turbinenrad(2) und Verdichterrad (3) gegeben ist.

5. Turbolader nach Anspruch 3 oder 4, **dadurch gekennzeichnet, dass** zwischen Turbinengehäuse (5) und Verdichtergehäuse (6) ein Lagergehäuse (7) vorgesehen ist zur Aufnahme von Lagerelementen für Turbinenrad (2) und Verdichterrad (3).

6. Turbolader nach einem der vorhergehenden Ansprüche, **dadurch gekennzeichnet, dass** der Rotor (4a) des Elektromotors (4) einen Rotormagneten (4c) aufweist, der von einer Armierung (4d) umgeben ist (Figur 1d).

7. Turbolader nach einem der vorhergehenden Ansprüche, **dadurch gekennzeichnet, dass** der Stator (4b) im Wesentlichen eine hohlzylindrische Form aufweist.

8. Turbolader nach Anspruch 7, **dadurch gekennzeichnet, dass** der Stator (4b) als Teil der Innenwand des Verdichtergehäuses (6) ausgeführt ist.

9. Turbolader nach einem der Ansprüche 7 oder 8, **dadurch gekennzeichnet, dass** der Stator (4b) als Einsatz in eine korrespondierende Öffnung des Verdichtergehäuses (6) einsetzbar ist.

10. Turbolader nach einem der Ansprüche 7 bis 9, **dadurch gekennzeichnet, dass** der Rotorspalt zwischen Rotor (4a) und Stator (4b) eine Einlassluftöffnung (4e) für das Verdichterrad darstellt.

11. Turbolader nach Anspruch 10, **dadurch gekennzeichnet, dass** die Einlassluftöffnung (4e) frei von Streben zwischen Rotor (4a) und Stator (4b) ist.

12. Turbolader nach einem der Ansprüche 6 bis 11, **dadurch gekennzeichnet, dass** die Armierung (4d) des Rotors (4a) becherförmig ausgeführt ist.

13. Turbolader nach einem der Ansprüche 6 bis 12, **dadurch gekennzeichnet, dass** der Rotormagnet (4c) innen bereichsweise hohl ist zum Aufstecken auf eine gemeinsame Welle (8) mit dem Verdichterrad.

14. Turbolader nach einem der Ansprüche 6 bis 12, **dadurch gekennzeichnet, dass** der Rotormagnet partiell oder auch komplett in das Verdichterrad integriert ist.

15. Turbolader nach einem der vorhergehenden Ansprüche, **dadurch gekennzeichnet, dass** das Verdichterrad (3) aus einem nichtmetallischen Material ist, vorzugsweise aus einem verstärkten oder unverstärkten Kunststoff.

16. Turbolader nach einem der Ansprüche 2 bis 15, **dadurch gekennzeichnet, dass** das Turbinengehäuse (5) mit einer Abgasleitung eines Verbrennungskraftmotors verbunden ist zum Antrieb des Turbinenrades mittels aus dem Verbrennungskraftmotor ausströmenden Abgases.

17. Turbolader nach einem der vorhergehenden Ansprüche, **dadurch gekennzeichnet, dass** der Elektromotor (4) vom Motorbetrieb in den Generatorbetrieb umschaltbar ist.

18. Turbolader nach einem der vorhergehenden Ansprüche, **dadurch gekennzeichnet, dass** die Sollspannung des Elektromotors (4) 12, 24 oder 48 V beträgt.

19. Antriebssystem für Kraftfahrzeuge, enthaltend einen Verbrennungskraftmotor, einen Speicher für elektrische Energie sowie einen Turbolader (1) nach einem der vorhergehenden Ansprüche, **dadurch gekennzeichnet, dass** der Elektromotor (4) des Turboladers (1) mit dem Speicher für elektrische Energie verbunden ist zur Entnahme elektrischer Energie in einem Motorbetrieb des Turboladers (1) und zur Einspeisung elektrischer Energie in einem Generatorbetrieb des Turboladers (1).

20. Antriebssystem nach Anspruch 19, **dadurch gekennzeichnet, dass** der mit dem Elektromotor (4) des Turboladers (1) verbundene elektrische Speicher zusätzlich mit einem elektromotorischen Antrieb eines Kraftfahrzeuges verbindbar ist.

21. Antriebssystem nach einem der Ansprüche 19 oder 20, **dadurch gekennzeichnet, dass** dieses eine Steuerelektronik zur Ermittlung der Drehzahl von Turbinenrad (2) oder Verdichterrad (3), Ist-Werten von turbinengehäuseseitigen und verdichtergehäuseseitigen Druckverhältnissen sowie weiteren für den Verbrennungskraftmotor drehmomentrelevanten Werten enthält.

## Claims

1. A turbocharger (1), containing a turbine wheel (2) and also a compressor wheel (3) connected thereto, with an electric motor (4) being provided on the side of the compressor wheel remote from the turbine wheel and a rotor (4a) of the electric motor which is connected in rotation-resistant manner to the compressor wheel (3) being designed to be freely projecting and the electric motor having a stator, **characterised in that** the minimum internal diameter of the stator is 1.5 to 8 times as large as the maximum external diameter of the rotor.

2. A turbocharger according to Claim 1, **characterised in that** the turbine wheel (2) and compressor wheel (3) are permanently connected together in rotation-resistant manner.

3. A turbocharger according to one of the preceding claims, **characterised in that** it has a casing which contains a turbine casing (5) for the turbine wheel (2) and also a compressor casing (6) for the compressor wheel (3).

4. A turbocharger according to one of the preceding claims, **characterised in that** the mounting of the turbine wheel (2) and compressor wheel (3) is provided exclusively in the region between the turbine wheel (2) and compressor wheel (3).

5. A turbocharger according to Claim 3 or 4, **characterised in that** a bearing casing (7) is provided between the turbine casing (5) and compressor casing (6) for receiving bearing elements for the turbine wheel (2) and compressor wheel (3).

6. A turbocharger according to one of the preceding claims, **characterised in that** the rotor (4a) of the electric motor (4) has a rotor magnet (4c) which is surrounded by a reinforcement (4d) (Figure 1d).

7. A turbocharger according to one of the preceding claims, **characterised in that** the stator (4b) has substantially a hollow-cylindrical form.

8. A turbocharger according to Claim 7, **characterised in that** the stator (4b) is designed as part of the inner wall of the compressor housing (6).

9. A turbocharger according to one of Claims 7 or 8, **characterised in that** the stator (4b) can be inserted as an insert into a corresponding opening in the compressor housing (6).

10. A turbocharger according to one of Claims 7 to 9, **characterised in that** the rotor gap between the rotor (4a) and stator (4b) represents an intake air opening (4e) for the compressor wheel.

11. A turbocharger according to Claim 10, **characterised in that** the intake air opening (4e) is free from struts between the rotor (4a) and stator (4b).

12. A turbocharger according to one of Claims 6 to 11, **characterised in that** the reinforcement (4d) of the rotor (4a) is designed in a beaker shape.

13. A turbocharger according to one of Claims 6 to 12, **characterised in that** the rotor magnet (4c) internally is hollow in regions for placing on a common shaft (8) with the compressor wheel.

14. A turbocharger according to one of Claims 6 to 12, **characterised in that** the rotor magnet is partially or alternatively completely integrated in the compressor wheel.

15. A turbocharger according to one of the preceding claims, **characterised in that** the compressor wheel (3) is made from a non-metallic material, preferably from a reinforced or non-reinforced plastics material.

16. A turbocharger according to one of Claims 2 to 15, **characterised in that** the turbine casing (5) is connected to a gas line of a combustion engine for driving the turbine wheel by means of exhaust flowing out of the combustion engine.

17. A turbocharger according to one of the preceding claims, **characterised in that** the electric motor (4) can be switched from engine operation into generator operation.

18. A turbocharger according to one of the preceding claims, **characterised in that** the rated voltage of the electric motor (4) is 12, 24 or 48 V.

19. A drive system for motor vehicles, containing an combustion engine, a store for electrical energy and also a turbocharger (1) according to one of the preceding claims, **characterised in that** the electric motor (4) of the turbocharger (1) is connected to the store for electrical energy for removing electrical energy in an engine operation of the turbocharger (1) and for feeding in electrical energy in a generator operation of the turbocharger (1).

20. A drive system according to Claim 19, **characterised in that** the electric store connected to the electric motor (4) of the turbocharger (1) can additionally be connected to an electric-motor drive of a motor vehicle.

21. A drive system according to one of Claims 19 or 20, **characterised in that** it contains control electronics for determining the speed of the turbine wheel (2) or compressor wheel (3), actual values of pressure conditions on the turbine casing side and on the compressor casing side and also further values relevant to torque for the combustion engine.

## Revendications

1. Turbocompresseur (1), comportant une roue de turbine (2) et une roue de compresseur (3) reliée à cette dernière, un moteur électrique (4) étant prévu sur le côté de la roue de compresseur, opposé à la roue de turbine, et un rotor (4a) du moteur électrique, relié de manière solidaire en rotation avec la roue de compresseur (3), est réalisé en porte-à-faux, et le moteur électrique comporte un stator,
**caractérisé en ce que** le plus petit diamètre intérieur du stator est 1,5 à 1,8 fois aussi grand que le plus grand diamètre extérieur du rotor.

2. Turbocompresseur selon la revendication 1, **caractérisé en ce que** la roue de turbine (2) et la roue de compresseur (3) sont assemblées l'une à l'autre en permanence de manière solidaire en rotation.

3. Turbocompresseur selon l'une quelconque des revendications précédentes, **caractérisé en ce que** celui-ci comporte un carter, qui contient un carter de turbine (5) pour la roue de turbine (2) et un carter de compresseur (6) pour la roue de compresseur (3).

4. Turbocompresseur selon l'une quelconque des revendications précédentes, **caractérisé en ce que** le support de la roue de turbine (2) et de la roue de compresseur (3) est assuré uniquement dans la zone entre la roue de turbine (2) et la roue de compresseur (3).

5. Turbocompresseur selon la revendication 3 ou 4, **caractérisé en ce qu'**entre le carter de turbine (5) et le carter de compresseur (6), il est prévu un carter pour paliers (7) destiné à recevoir les éléments de palier pour la roue de turbine (2) et la roue de compresseur (3).

6. Turbocompresseur selon l'une quelconque des revendications précédentes, **caractérisé en ce que** le rotor (4a) du moteur électrique (4) comporte un aimant (4c), qui est entouré par un blindage (4d) (figure 1d).

7. Turbocompresseur selon l'une quelconque des revendications précédentes, **caractérisé en ce que** le stator (4b) a sensiblement une forme cylindrique creuse.

8. Turbocompresseur selon la revendication 7, **caractérisé en ce que** le stator (4b) est réalisé sous la forme d'une partie de la paroi intérieure du carter de compresseur (6).

9. Turbocompresseur selon la revendication 7 ou 8, **caractérisé en ce que** le stator (4b) peut être mis en place en tant qu'insert dans une ouverture correspondante du carter de compresseur (6).

10. Turbocompresseur selon l'une quelconque des revendications 7 à 9, **caractérisé en ce que** la fente entre le rotor (4a) et le stator (4b) constitue un orifice d'admission d'air (4e) pour la roue de compresseur.

11. Turbocompresseur selon la revendication 10, **caractérisé en ce que** l'orifice d'admission d'air (4e) ne comporte pas d'entretoises entre le rotor (4a) et le stator (4b).

12. Turbocompresseur selon l'une quelconque des revendications 6 à 11, **caractérisé en ce que** le blindage (4d) du rotor (4a) est réalisé en forme de godet.

13. Turbocompresseur selon l'une quelconque des revendications 6 à 12, **caractérisé en ce que** l'aimant (4c) du rotor est creux par zones à l'intérieur en vue de son enfichage sur un arbre (8) commun avec la roue de compresseur.

14. Turbocompresseur selon l'une quelconque des revendications 6 à 12, **caractérisé en ce que** l'aimant du rotor est intégré partiellement ou aussi complètement dans la roue de compresseur.

15. Turbocompresseur selon l'une quelconque des revendications précédentes, **caractérisé en ce que** la roue de compresseur (3) est réalisée dans un matériau non métallique, de préférence dans une matière plastique renforcée ou non renforcée.

16. Turbocompresseur selon l'une quelconque des revendications 2 à 15, **caractérisé en ce que** le carter de turbine (5) est relié à une conduite d'échappement d'un moteur à combustion interne en vue de l'entraînement de la roue de turbine au moyen des gaz d'échappement affluant hors du moteur à combustion interne.

17. Turbocompresseur selon l'une quelconque des revendications précédentes, **caractérisé en ce que** le moteur électrique (4) peut être commuté pour passer du mode moteur en mode générateur.

18. Turbocompresseur selon l'une quelconque des revendications précédentes, **caractérisé en ce que** la tension de consigne du moteur électrique (4) est de l'ordre de 12, 24 ou 48 V.

19. Système d'entraînement pour véhicules à moteur, comportant un moteur à combustion interne, un accumulateur pour l'énergie électrique et un turbocompresseur (1) selon l'une quelconque des revendications précédentes, **caractérisé en ce que** le moteur électrique (4) du turbocompresseur (1) est relié à l'accumulateur d'énergie électrique pour prélever l'énergie électrique dans un mode moteur du turbocompresseur (1) et pour injecter l'énergie électrique dans un mode générateur du turbocompresseur (1).

20. Système d'entraînement selon la revendication 19, **caractérisé en ce que** l'accumulateur électrique relié au moteur électrique (4) du turbocompresseur (1) peut être relié, en plus, à un entraînement électromotorisé d'un véhicule à moteur.

21. Système d'entraînement selon la revendication 19 ou 20, **caractérisé en ce que** celui-ci comporte une électronique de commande pour calculer la vitesse de rotation de la roue de turbine (2) ou de la roue de compresseur (3), les valeurs réelles des conditions de pression du côté du carter de turbine et du côté du carter du compresseur, ainsi que d'autres valeurs significatives pour le couple de rotation du moteur à combustion interne.
